# EUROPÄISCHE PATENTSCHRIFT

(11) **EP 2 080 458 B1**
(45) Veröffentlichungstag und Bekanntmachung des Hinweises auf die Patenterteilung: **25.04.2012**
(21) Anmeldenummer: 09100030.7
(22) Anmeldetag: 12.01.2009
(51) Int. Cl.: A47J 31/44, A47J 31/46

(54) **Dampfrohr für einen Kaffeevollautomaten**
Steam pipe for a fully automatic coffee machine
Tuyau à vapeur pour une machine à café totalement automatique

(30) Priorität: 21.01.2008 DE 102008005361
(43) Veröffentlichungstag der Anmeldung: 22.07.2009
(73) Patentinhaber: BSH Bosch und Siemens Hausgeräte GmbH, 81739 München (DE)
(72) Erfinder: Hauser, Andreas, 83370, Seeon (DE); Mathes, Dr. Anton, 83364, Neukirchen am Teisenberg (DE); Steffl, Michael, 83250, Marquartstein (DE)

(56) Entgegenhaltungen:
- WO-A-94/23623
- FR-A- 2 559 663

## Beschreibung

Die Erfindung betrifft eine Kaffeezubereitungsmaschine mit einem Dampfrohr an einem dem Bediener zugewandten Frontbereich der Kaffeemaschine, das zur Abgabe von Dampf in einen Getränkebehälter relativ zum Gehäuse der Zubereitungsmaschine von einer Ruhestellung in eine Abgabestellung bewegbar angeordnet ist, und mit einem Ventil, das zur Abgabe von Dampf aus dem Dampfrohr betätigbar ist. Das Dampfrohr wird häufig mit einer Dampfdüse versehen, die im Betrieb in eine Tasse bzw. ein Getränk eingetaucht werden kann, um es mit Dampf zu erhitzen oder zu schäumen. Das Dampfrohr kann auch zusätzlich oder wahlweise Milch ansaugen. Es muss dafür nicht zwingend an der Frontseite der Zubereitungsmaschine, sondern kann auch aus Platz- oder Designgründen an einer Seitenfläche der Maschine angebracht sein, jedenfalls in einem Bereich, der dem Bediener bei der Benutzung der Kaffeemaschine leicht zugänglich ist. Das Dampfrohr kann in die Ruhestellung verschwenkt werden, um entweder einen weiteren Zubereitungsvorgang räumlich nicht zu behindern oder auch optisch nicht zu stören.

Ein derartiges Dampfrohr zeigt zum Beispiel die WO 1994/23623 A1. In seinem Endbereich nahezu rechtwinklig abgebogen und schwenkbar ragt es aus einer Kaffeemaschine über eine Abstellfläche. In seiner Ruhestellung mündet es knapp darüber, um bei einem Reinigungsvorgang mittels Dampfstoß den austretenden Dampf direkt über die perforierte Abstellfläche in eine Tropfschale darunter leiten zu können. Um ein Getränk zu erhitzen oder aufzuschäumen, wird das Dampfrohr um einen Winkel nach oben verschwenkt, sodass es in einen Getränkebehälter gerichtet werden kann. Per Knopfdruck kann der Dampf eingeschaltet werden.

Die FR 2 559 663 offenbart eine Verteilereinheit zum Verteilen von Dampf, insbesondere für Espressomaschinen, die ein Ausgießrohr für den erzeugten Dampf besitzt, die dadurch gekennzeichnet ist, dass sie ein Rückschlagventil besitzt, das durch die Bewegung des Ausgießrohrs schaltbar ist.

Aufgabe der vorliegenden Erfindung ist es, die Bedienung einer Dampfdüse weiter zu vereinfachen und zu erleichtern. Diese Aufgabe wird bei der eingangs erwähnten Kaffeezubereitungsmaschine dadurch gelöst, dass das Ventil bereits mit der Bewegung des Dampfrohres von der Ruhestellung in die Abgabestellung und umgekehrt betätigbar ist, und dass Mittel vorhanden sind, die eine dauerhafte Zwischenstellungen des Dampfrohres (6; 16) zwischen der Ruhe- und der Abgabestellung verhindern. Die Erfindung wendet sich also davon ab, dass für die Bedienung eines Dampfrohres grundsätzlich mindestens zwei Bedienungsschritte erforderlich sind, nämlich zum einen das Verschwenken des Dampfrohres und zum anderen das Einschalten der Dampfabgabe. Sie verfolgt vielmehr das Prinzip, zugleich mit der Bewegung des Dampfrohres auch dessen Ventil zu betätigen. Damit wird die Betätigungsbewegung des Dampfrohres zugleich in eine Betätigungsbewegung für das Dampfventil umgesetzt. Durch die Bewegung des Dampfrohres von der Ruhestellung in die Abgabestellung wird also das Ventil geöffnet, bei der umgekehrten Bewegung dagegen, von der Abgabestellung in die Ruhestellung, geschlossen. Das Dampfrohr stellt somit zugleich die Betätigungseinrichtung für das Dampfventil dar. Dadurch lässt sich nicht nur die Bedienung vereinfachen und erleichtern, sondern auch der technische Aufwand an der Zubereitungsmaschine verringern und damit Kosten einsparen. Wegen des logischen Zusammenhangs zwischen der Bewegung des Dampfrohrs einerseits und der Abgabe von Dampf andererseits gewinnt die Bedienung der Kaffeezubereitungsmaschine an Komfort.

Grundsätzlich ist jede Bewegung des Dampfrohres für eine Änderung seiner Stellung denkbar. Nach einer vorteilhaften Ausgestaltung der Erfindung ist das Dampfrohr linear bewegbar. Es kann also entweder auf den Bediener zu bzw. von ihm weg oder in einer Ebene parallel zur Frontseite der Kaffeezubereitungsmaschine bewegt werden. Dort kann es quer zum Benutzer horizontal nach rechts oder links oder vertikal auf- oder abwärts bewegt, z. B. in einen Getränkebehälter gesenkt werden. Eine geradlinige Bewegung des Dampfrohres ermöglicht eine technisch einfache Betätigungsmechanik für das Ventil, weil die lineare Betätigungsbewegung des Dampfrohres ohne eine kinematische oder Richtungsumwandlung unmittelbar zur Betätigung des Ventils genutzt werden kann.

Nach einer dazu alternativen Ausgestaltungsform der Erfindung kann die Betätigung eine Schwenk- oder Kippbewegung des Dampfrohres umfassen. Eine Schwenk- oder Kippbewegung beruht auf einer Drehung, die wiederum ohne großen technischen Aufwand bzw. in eine sogar direkte Betätigungsbewegung für ein Dampfventil umgesetzt werden kann. Für eine Schwenk- bzw. Kippbewegung des Dampfrohres können Platz-oder Designgründe sprechen. So kann das Dampfrohr aus einer Ruhestellung seitlich am Gerätegehäuse in eine Arbeitsstellung vor die Gerätefront geschwenkt werden. In der Ruhestellung seitlich am Gerät nimmt das Dampfrohr keinen wertvollen Bedienungsplatz an der Frontseite der Maschine weg und stört auch ein gegebenenfalls symmetrisches Design nicht.

Bisher musste der Bediener einer Kaffeezubereitungsmaschine die Dampfabgabe durch einen eigenen Bedienungsschritt in Gang setzen, nachdem er das Dampfrohr geeignet positioniert hatte. Er war also auf den unmittelbar bevorstehenden Dampfaustritt nach einer gewählten Dampfdüsenstellung vorbereitet. Mit der erfinderischen Kombination aus der Betätigungsbewegung des Dampfrohres einerseits und dem gleichzeitigen Betätigen des Dampfventils andererseits erfolgt der Dampfaustritt unmittelbar nach Erreichen der Abgabestellung. Es muss daher aus Sicherheitsgründen gewährleistet sein, dass einerseits erst zu diesem Zeitpunkt ein Dampfaustritt erfolgt und andererseits die Abgabestellung des Dampfrohres zuverlässig eingenommen wird. Nach einer weiteren vorteilhaften Ausgestaltung der Erfindung verfügt die Kaffeezubereitungsmaschine daher über eine Kulissenführung des Dampfrohres zwischen der Ruhe- und der Abgabestellung. Mit ihrer Hilfe können zum einen verschiedene Betätigungsrichtungen - also etwa eine lineare Auszugbewegung des Dampfrohres und eine Schwenkbewegung - miteinander kombiniert werden. Zum anderen kann sie zumindest die Ruhestellung und die Abgabestellung eindeutig und für den Benutzer sicher nachvollziehbar definieren, sodass der Benutzer weder von der Dampfabgabe noch von ihrem Ausbleiben überrascht ist.

Erfindungsgemäß verfügt die Kaffeezubereitungsmaschine über Mittel, die dauerhafte Zwischenstellungen des Dampfrohres zwischen der Ruhe- und der Abgabestellung verhindern. Dazu können insbesondere Federn dienen, die das Dampfrohr in die eine und/oder andere Stellung zwingen. Die Mittel sorgen also für eindeutige Positionierungen des Dampfrohres in seinen beiden Endstellungen, damit der Betriebszustand des Dampfrohres jederzeit festliegt. Außerdem können diese Mittel die Lebensdauer des Dampfventils erhöhen, weil es nicht durch indifferente Zwischenstellungen belastet wird, in denen es dem Dampfdruck ebenfalls standhalten muss. Aus Sicherheitsgründen können die Mittel auch nur in Richtung der Ruhestellung wirken, sodass sie das Dampfrohr aus einer Zwischenstellung heraus selbsttätig in die Ruhestellung überführen. Dadurch wird eine ungewollte und überraschende Abgabe von Dampf in einer indifferenten Zwischenstellung des Dampfrohres zuverlässig vermieden.

Nach einer weiteren vorteilhaften Ausgestaltung der Erfindung ist das Dampfrohr halbautomatisch zwischen der Ruhestellung und der Abgabestellung verfahrbar.

Halbautomatisch bedeutet, dass nur für die Bewegung von der einen in die andere Stellung die Aktion des Bedieners erforderlich ist und die Gegenbewegung selbsttätig erfolgt. Dadurch kann eine komfortablere Bedienung der Kaffeezubereitungsmaschine erzielt werden. Das Dampfrohr wird halbautomatisch vorzugsweise von der Abgabestellung in die Ruhestellung überführt, damit der Benutzer bei der Gegenbewegung die Dampfabgabe bewusst steuern kann. Die Endposition der Gegenbewegung, nämlich die Ruhestellung, kann das Dampfrohr dagegen problemlos selbsttätig einnehmen, da es in dieser Position ohnehin deaktiviert ist.

Nach dem Bezug einer gewissen Dampfmenge muss die Bewegung des Dampfrohres von der Abgabestellung in die Ruhestellung initiiert werden. Dies kann z. B. mechanisch durch den Benutzer erfolgen, indem er das Dampfrohr eine gewisse Wegstrecke in Richtung Ruhestellung bewegt, woraufhin er den überwiegenden verbleibenden Weg selbsttätig zurücklegt. Zugleich kann durch diese Betätigung des Benutzers auch die Dampfmenge bestimmt werden, da durch den Benutzereingriff der Dampfbezug abgeschaltet wird. Alternativ dazu kann die Rückbewegung des Dampfrohres auch automatisch gesteuert werden, z. B. in Abhängigkeit von einer gewissen Dampfmenge. Hat also ein Benutzer aus der Kaffeemaschine eine definierte oder ggf. auch einstellbare Dampfmenge erhalten, so schaltet die Maschine den Dampfbezug wunschgemäß automatisch ab und verfährt das Dampfrohr aus der Abgabestellung in die Ruhestellung.

Die Halbautomatik kann zum Beispiel motorisch oder durch die Wirkung eines Magneten bewerkstelligt werden. Nach einer vorteilhaften Ausgestaltung der Erfindung erfolgt die Bewegung des Dampfrohres von der einen Stellung in die andere durch eine gespannte Feder. Die Feder erhält die Spannung durch die Gegenbewegung der von ihr verursachten Bewegung des Dampfrohres. Die Feder wirkt vorzugsweise in einer Richtung von der Abgabestellung in die Ruhestellung. Die Spannung erhält sie demzufolge durch die Betätigung des Benutzers, wenn er das Dampfrohr von seiner Ruhe- in seine Abgabestellung bewegt. Eine federbasierte Halbautomatik des Dampfrohres stellt eine mechanisch einfache Konstruktion dar, die aber dem Benutzer ein hohes Maß an Komfort bietet.

Nach einer weiteren vorteilhaften Ausgestaltung der Erfindung kann das Dampfrohr automatisch von der Abgabestellung in die Ruhestellung und umgekehrt von der Ruhestellung in die Abgabestellung verfahrbar sein. Diese Bewegung kann in einer oder in beiden Richtungen, z. B. motorisch oder durch die Wirkung eines Magneten, bewerkstelligt werden. Im ersten Fall kann sie gegen eine Federkraft erfolgen, die für die Gegenbewegung des Dampfrohres sorgt. Der Benutzer braucht also das Dampfrohr selbst gar nicht mehr zu betätigen, wodurch er nicht mehr in die Gefahr eines Verbrühens am Dampfrohr gerät. Der Dampfbezug kann folglich durch Tastendruck ausgelöst werden. Dies wird im Allgemeinen als besonders komfortabel empfunden. Die Bezugsdauer für Dampf kann entweder fest eingestellt oder durch den Benutzer wählbar erfolgen. Eine Wählbarkeit kann entweder durch Eingabe einer Bezugsdauer vor dem Dampfbezug oder durch einen zweiten Tastendruck nach Initiierung der Dampfabgabe erfolgen. Bei dieser Ausführungsform geschieht die Betätigung des Dampfventils ebenfalls durch eine Betätigung des Dampfrohrs, jetzt aber ausschließlich maschinengesteuert und nicht mehr unmittelbar durch eine Betätigung des Benutzers. Die Betätigung des Dampfventils erfolgt aber unverändert in einer der vorbeschriebenen Arten.

Da das Dampfrohr zugleich als Betätigungseinrichtung für das mit ihm verbundene Dampfventil dient, kann es nach einer weiteren vorteilhaften Ausgestaltung der Erfindung mit einem Griff versehen sein. Er kann in einem einfachen Fall in einer Ummantelung des Dampfrohres selbst bestehen, die zugleich ein Verbrennen des Benutzers an dem heißen Dampfrohr verhindert. In einer aufwändigeren Ausführung ist er ergonomisch ausgeformt, sodass er bequem ergriffen und bedient werden kann. Die Gestaltung als Griff erleichtert zudem die Bedienung der Maschine, weil sie durch die leichtere Erkennbarkeit zugleich den Benutzer bei der Bedienung der Kaffeemaschine führt.

Nach einer weiteren vorteilhaften Ausgestaltung der Erfindung kann das Dampfrohr in der Ruhestellung am bzw. im Gehäuse zumindest teilweise versenkt angeordnet sein. Es kann damit aus dem Ansichtsbereich der Kaffeemaschine entfernt werden, sodass es die Optik nicht mehr stört. Dazu kann es auf der Frontseite hinter einer Klappe verborgen sein. Bei einer seitlichen Anordnung dagegen kann auch sein Eintauchen in eine Vertiefung genügen. In Verbindung mit einer halbautomatischen Betätigung des Dampfrohres kann es günstig sein, wenn sie nunmehr in eine Richtung auf die Abgabestellung hin wirkt. Denn da das Dampfrohr in der Ruhestellung optisch unauffällig angebracht ist, dürfte seine Bewegung in die Abgabestellung für den Benutzer schwieriger zu bewerkstelligen sein. Die Gegenrichtung dagegen kann der Benutzer leicht nachvollziehen.

Nach einer weiteren vorteilhaften Ausgestaltung der Erfindung kann die Kaffeezubereitungsmaschine über Erfassungsmittel zur Feststellung der Position des Dampfrohres in der Abgabe- und/oder Ruhestellung verfügen. In einer einfachen Ausführungsform können Mikroschalter als Erfassungsmittel dienen, die jeweils in der einen und/oder der anderen Stellung des Dampfrohres geschaltet werden. Sie können insbesondere in der Abgabestellung des Dampfrohres zu einer erhöhten Bedienungssicherheit der Kaffeezubereitungsmaschine dienen, indem sie erst bei korrekt eingenommener Abgabestellung des Dampfrohres geschaltet werden und eine Dampfabgabe ermöglichen. Alternativ dazu können sie auch lediglich als Warneinrichtungen dienen, die eine nicht vollständig eingenommene Abgabe- bzw. Ruhestellung signalisieren. Alternativ zu Mikroschaltern können die Erfassungsmittel die Arbeits- oder Ruhestellung des Dampfrohres und damit die Stellung des Ventils auch magnetisch oder kapazitiv erfassen. Dazu kann der Stößel des Ventils, der durch die Bewegung des Dampfrohres betätigt wird, ein ihn umgebendes Magnetfeld verändern oder bei Ausbildung des ihn umgebenden Ventilkörpers als Kondensator in Abhängigkeit von seiner Stellung eine Kapazitätsänderung hervorrufen. Durch die Erfassungsmittel kann also die Bedienungssicherheit und -zuverlässigkeit der Kaffeezubereitungsmaschine weiter erhöht werden.

Weil Dampfdüsen zur Zubereitung von Getränken bislang nicht zwingend erforderlich waren, fand man sie oft nur an komfortableren Geräten und dort separat vom Kaffeegetränkeauslass angeordnet. Nach einer weiteren vorteilhaften Ausgestaltung der Erfindung kann das Dampfrohr mit dem Kaffeeauslass der Getränkezubereitungsmaschine räumlich und insbesondere mechanisch kombiniert sein. Dadurch ergeben sich nicht nur Designvorteile, weil die Dampfdüse jetzt keinen separaten Platz im Frontbereich der Kaffeemaschine beansprucht, der ansprechend gestaltet werden muss. Eine Kombination beider Auslässe bietet auch einen höheren Bedienungskomfort, weil bei der Zubereitung eines Getränks unter Zuhilfenahme einer Dampfdüse der Getränkebehälter nicht wegbewegt bzw. die Dampfdüse nicht in einem separaten Bedienungsschritt in den Getränkebehälter gerichtet werden muss. Die mechanische Kombination beider Auslässe bedeutet, dass die Dampfdüse nicht mehr getrennt vom Kaffeeauslass bedient werden muss, sondern nur noch mit ihm zusammen. Wird also der gemeinsame Getränkeauslass zur Bedienung des Dampfventils verschoben, so wird zwangsweise auch der Kaffeegetränkeauslass mit bewegt. Dennoch sind auch hier grundsätzlich alle oben beschriebenen Bewegungsmöglichkeiten des Dampfrohres denkbar, also sowohl eine horizontale oder vertikale Verschiebung als auch ein Drehen, Schwenken oder Kippen des Auslasses. Den dadurch erzielbaren unterschiedlichen Positionen können dann jeweilige Betriebszustände der Dampfdüse zugeordnet werden. Bei nur zwei Betriebsstellungen des gemeinsamen Auslasses an den Enden einer Betätigungsbewegung kann also die eine eine Ruhe- und die andere eine Abgabestellung der Dampfdüse definieren. Davon unabhängig kann jedoch der gemeinsame Getränkeauslass in diesen beiden Stellungen der Dampfdüse ein Kaffeegetränk abgeben. Während also eine der Stellungen eine Ruhestellung und die andere eine Abgabestellung für die Dampfdüse darstellen kann, können diese beiden Positionen Abgabestellungen für ein Kaffeegetränk sein.

Bei einer vertikalen Verschiebbarkeit des gemeinsamen Getränkeauslasses kann der Getränkeauslass in einer niedrigen Stellung z. B. für die Zubereitung von Espresso gedacht sein. Da für die Zubereitung von Espresso kein separater Dampf erforderlich ist, kann das Dampfventil in dieser Position geschlossen sein. Eine mittlere Position kann der Zubereitung von gewöhnlichem Brühkaffee dienen. Weil auch dafür keine zusätzliche Dampffunktion erforderlich ist, kann das Ventil auch in dieser Position geschlossen sein. Eine obere Position des Getränkeauslasses kann ermöglichen, dass unter ihm ein hohes Getränkebehältnis abgestellt werden kann, wie es gewöhnlich für Latte macchiato verwendet wird. Da für die Zubereitung von Latte macchiato Milch aufgeschäumt wird, kann in dieser Position des Getränkeauslasses das Dampfventil geöffnet sein.

Eine entsprechende Ausbildung der Kaffeemaschine kann auch für einen Getränkeauslass gewählt werden, der zwischen mindestens zwei Positionen verschwenkbar ist, sodass er sich in einer Position in einem linken Bereich und in einer anderen Position in einem rechten Bereich der Frontseite der Kaffeemaschine befindet. Hier kann durch eine abgestufte Aufstellfläche für Getränkegefäße unterhalb des Getränkeauslasses Platz für ein höheres Getränkegefäß geschaffen sein. So kann etwa die linke Position mit einer höher angeordneten Aufstellfläche der Zubereitung von Espresso und Kaffeegetränken dienen, während die rechte Seite mit einer abgesenkten Abstellfläche für die Zubereitung von Latte macchiato geeignet ist. Dementsprechend würde die Stellung des Getränkeauslasses auf der linken Seite die Ruhestellung der Dampfdüse darstellen und die auf der rechten Seite die Abgabestellung.

Der Dampf zum Erhitzen oder Schäumen wird naturgemäß mit einem höheren Druck von der Maschine abgegeben als das Kaffeegetränk. Nach einer weiteren vorteilhaften Ausgestaltung der Erfindung kann das Dampfrohr daher separat bedienbar, also gegenüber dem gemeinsamen Getränkeauslass separat zuwischen einer Ruhe- und einer Abgabestellung bewegbar angeordnet sein. Denn während das Kaffeegetränk auch aus größerer Höhe in einen Getränkebehälter laufen kann, ohne die Umgebung durch Spritzen zu verschmutzen, sollte ein Dampfrohr den Dampf auf möglichst kurzem Wege in den Getränkebehälter abgeben können. Dadurch kann ein Spritzen aufgrund seines höheren Drucks weitgehend vermieden werden. Ein separat gegenüber dem Getränkeauslass bewegbares Dampfrohr erhöht damit also die Bedienungssicherheit des Geräts. Zusammen mit der gleichzeitigen Steuerung des Dampfventils bei der Bewegung des Dampfrohres bietet die Kaffeemaschine größtmöglichen Bedienungskomfort.

Die eingangs genannte Aufgabe wird schließlich auch durch eine Kaffeezubereitungsmaschine mit einem Dampfrohr gelöst, das an einem einem Benutzer zugewandten Frontbereich der Maschine angeordnet und zur Abgabe von Dampf in einen Getränkebehälter relativ zum Gehäuse der Zubereitungsmaschine von einer Ruhestellung in eine Abgabestellung bewegbar angeordnet ist, und mit einem Ventil, das zur Abgabe von Dampf aus dem Dampfrohr betätigbar ist, indem das Dampfrohr zur Betätigung des Ventils verwendet wird.

Das Prinzip der Erfindung wird im Folgenden anhand einer Zeichnung beispielshalber noch näher erläutert. In der Zeichnung zeigen:
Figur 1: eine dreidimensionale Ansicht eines Kaffeevollautomaten,
Figur 2a: eine Frontansicht des Kaffeevollautomaten,
Figur 2b: eine dreidimensionale Ansicht des Automaten mit verschwenkter Düse,
Figur 3a: eine Seitenansicht eines weiteren Automaten,
Figur 3b: eine Seitenansicht des Automaten mit ausgefahrener Düse,
Figur 4: eine Schnittansicht eines geöffneten Dampfventils, und
Figur 5: eine Schnittansicht des geschlossenen Dampfventils.

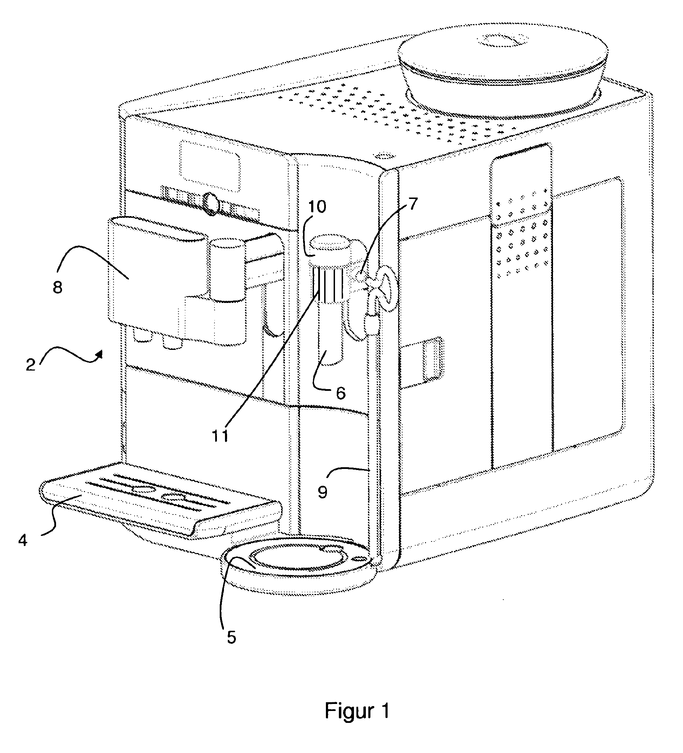

Ein Kaffeevollautomat gemäß Figur 1 weist auf seiner einem Benutzer zugewandten Gerätefront 2 eine höher angeordnete Tassenabstellfläche 4 und eine tiefer gelegene Abstellfläche 5 auf, auf der während der Zubereitung des Getränks durch den Automaten ein Getränkegefäß abgestellt werden kann. Oberhalb der Abstellfläche 5 befinden sich ein Dampfrohr 6 und daneben über der Abstellfläche 4 ein Getränkeauslass 8. Das Dampfrohr 6 kann für die Zubereitung von Milchschaum über einen Anschluss 7 mit einem Ansaugrohr 9 verbunden werden, das in einen Milchvorrat gesteckt werden kann. Das Dampfrohr 6 befindet sich in einer Ruhestellung, in der es keinen Dampf abgibt. Es verfügt über ein Gehäuse 10, dessen unterer Bereich als gerippte Grifffläche 11 ausgestaltet ist. Daran kann der Benutzer das Dampfrohr 6 in einer später beschriebenen Weise betätigen, ohne sich dabei die Finger an dem im Betrieb heißen Dampfrohr 6 zu verbrennen. Die Grifffläche 11 vermittelt dem Benutzer außerdem, dass er das Dampfrohr 6 manuell bedienen muss.

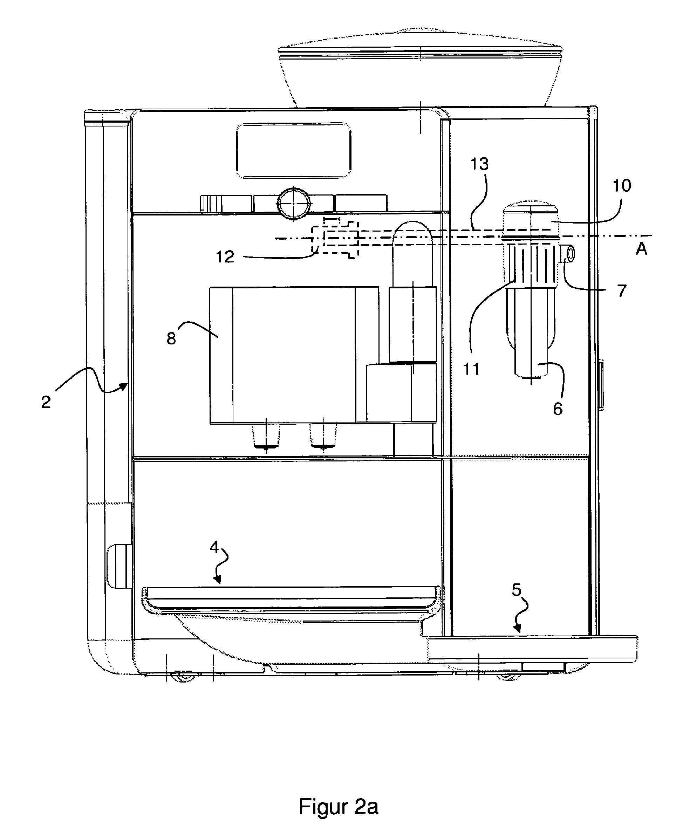

In der Figur 2a ist derselbe Automat in einer Frontansicht wiedergegeben. Für eine bessere Übersichtlichkeit ist auf dieser und allen folgenden Darstellungen das Ansaugrohr 9 weggelassen. In gestrichelten Linien ist in der Figur 2a angedeutet, dass das Dampfrohr 6 im Gehäuse über seine Fortsetzung 16 mit einem Dampfventil 12 innerhalb des Automaten in Verbindung steht.

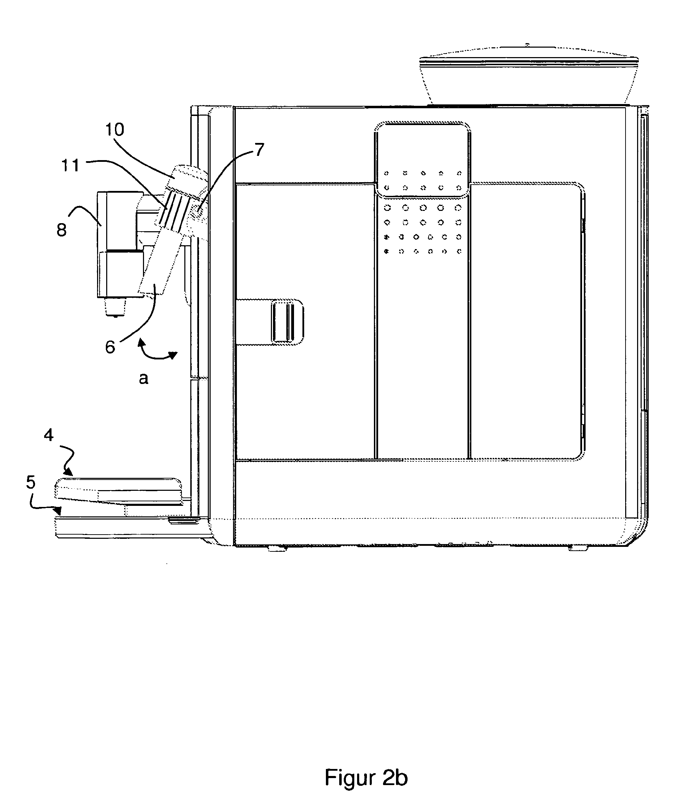

Für die Dampfabgabe, zum Beispiel zum Aufschäumen von Milch, ist das Dampfrohr 6 auf einen Benutzer hin auszuschwenken. Es befindet sich dann in einer Abgabestellung, in der es Dampf spenden kann. Die Abgabestellung des Dampfrohrs 6 ist in Figur 2b dargestellt. Bei einem Verschwenken des Dampfrohrs 6 von seiner Ruhestellung in seine Abgabestellung entlang den Schwenkrichtungen a dreht es um eine Achse A, die zugleich eine Längsachse des Dampfventils 12 und des Dampfrohrs 16 darstellt. Der unmittelbare Anschluss des Dampfrohrs 6 am Dampfventil 12 wird also dazu genutzt, durch die Bedienungsbewegung des Dampfrohrs 6 von seiner Ruhe- in seine Abgabestellung gleichzeitig das Dampfventil 12 zu schalten. Die Schwenkbewegung des Dampfrohrs 6 um die Achse A erzeugt eine Drehbewegung, die einen nicht näher dargestellten Stößel des Ventils 12 ebenfalls verdreht. Sobald also der Bediener das Dampfrohr 6 ausgeschwenkt hat, um es in einen Getränkebehälter auf der Abstellfläche 5 zu richten, gibt der Kaffeevollautomat wunschgemäß Dampf ab. Durch Zurückschwenken des Dampfrohrs in seine in den Figuren 1 und 2 gezeigte Ruhestellung dagegen wird die Dampfzufuhr abgeschaltet. Das Dampfventil 12 wird geschlossen.

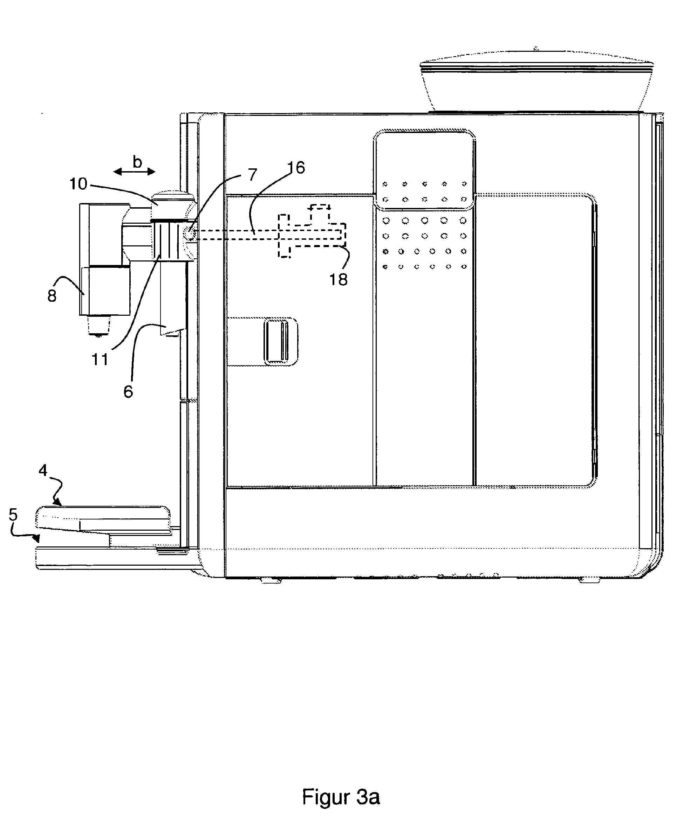

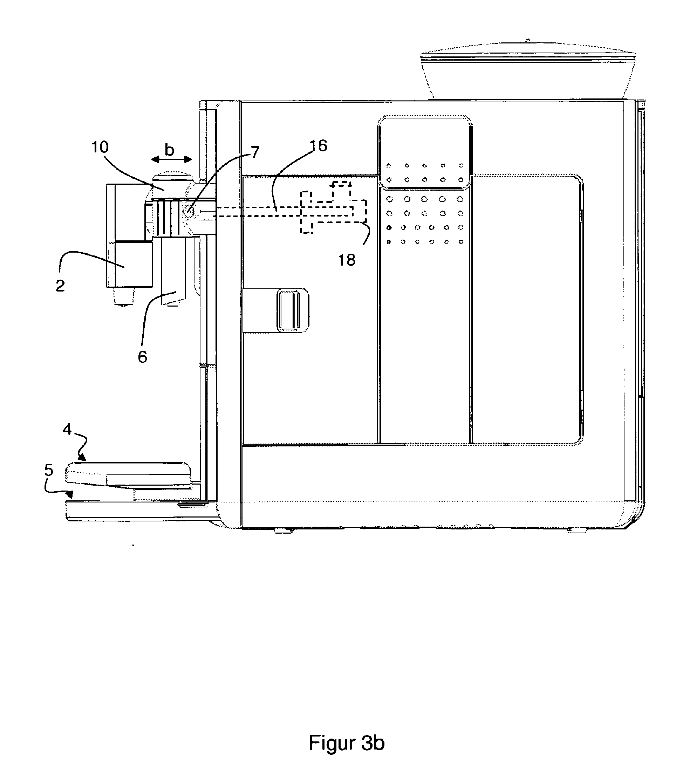

Figur 3a zeigt eine alternative Ausführungsform des Kaffeevollautomaten mit einem bewegbaren Dampfrohr 16 in Ruhestellung. Durch eine Verschiebung in die Verschiebungsrichtung b gelangt es in seine Abgabestellung, die in Figur 3b wiedergegeben ist. Es wird also in einer Richtung auf den Bediener zu und damit senkrecht zur Gerätefront 2 des Kaffeevollautomaten horizontal verschoben, um von der Ruhe- in die Abgabestellung zu gelangen und umgekehrt. Das Dampfrohr 16 ist mit einem Dampfventil 18 innerhalb des Automaten verbunden, das gestrichelt dargestellt ist. Auch hier dient die Bedienungsbewegung des Dampfrohrs 16 unmittelbar zum Schalten des Dampfventils 18. Die lineare Verschiebbewegung b des Dampfrohrs 16 wird in eine ebensolche Bewegung eines nicht dargestellten Ventilstößels des Dampfventils 18 übertragen, womit das Dampfventil 18 geöffnet oder geschlossen wird.

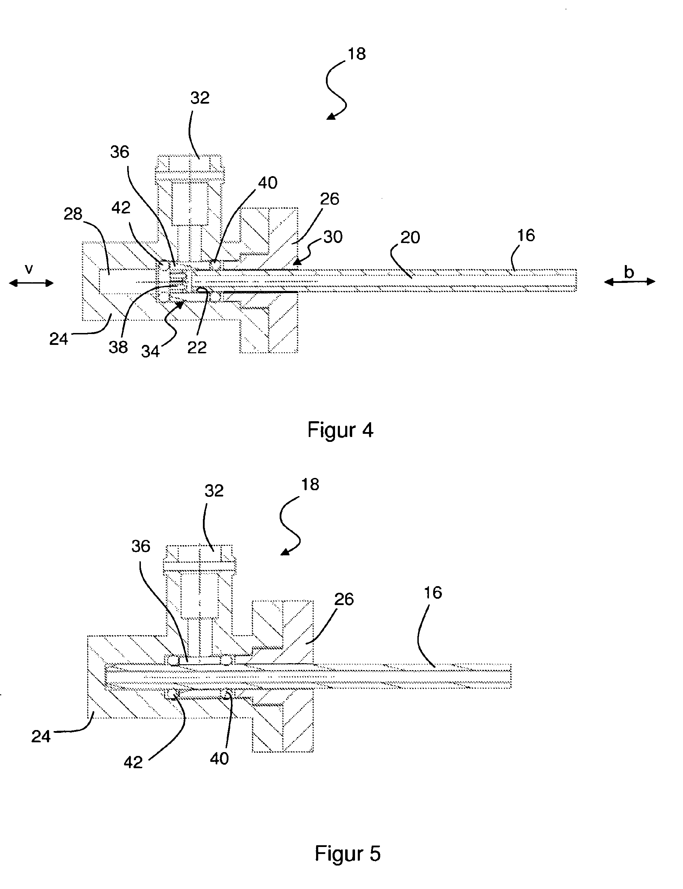

Ein Beispiel für ein Dampfventil gemäß Figur 3 ist in Figur 4 in einer Schnittansicht dargestellt. Es umfasst das Dampfrohr 16, das innerhalb des Dampfventils 18 zugleich als dessen Stößel dient. Es enthält einen Dampfleitkanal 20 und läuft auf seinem linksseitigen Ende in eine Fase 22 aus. Das Dampfventil 18 umfasst einen T-förmigen Ventilkörper 24, der von einem Ventildeckel 26 verschlossen ist. Der Ventilkörper 24 umschließt einen Hauptkanal 28, der über einen Durchbruch 30 im Deckel 26 fortgesetzt ist und in dem das Dampfrohr 16 horizontal entlang den Verschiebungsrichtungen b bewegbar ist. Vom Hauptkanal zweigt ein Zuführkanal 32 ab, der in einer Ventilkammer 34 rechtwinklig auf den Hauptkanal 28 trifft. Die Ventilkammer 34 enthält eine Führungshülse 36, die das linksseitige Ende des Dampfrohrs 16 im Bereich der Ventilkammer 34 führt. Auf ihrer dem Ventildeckel 26 abgewandten Seite weist sie eine Vielzahl von Durchbrechungen 38 auf, die eine Fluidverbindung zwischen dem Zuführkanal 32, der Ventilkammer 34 und dem Hauptkanal 28 ermöglichen. In axialer Richtung schließt sie beidseits an O-Ringe 40, 42 an, die eine fluiddichte Abdichtung zwischen dem Ventilkörper 24 und dem Dampfrohr 16 sicherstellen.

Figur 4 stellt eine Abgabestellung des Dampfrohrs 16 dar, das Dampfventil 18 ist also geöffnet. Aus dem Zuführkanal 32 kann Dampf in die Ventilkammer 34 einströmen, die durch die Durchbrechungen 38 in der Führungshülse 36 in den Hauptkanal 28 gelangt. Vom Hauptkanal 28 aus strömt es durch den Dampfkanal 20 des Dampfrohrs 16 aus der Maschine.

Möchte ein Benutzer den Dampfbezug beenden, so bringt er das Dampfrohr 16 von der Abgabestellung gemäß Figur 4 in dessen Ruhestellung. Dazu schiebt er das Dampfrohr 16 entlang der Verschiebungsrichtungen b nach links und verschließt damit das Dampfventil 18. Die Ruhestellung des Dampfrohrs 16 bzw. das verschlossene Dampfventil 18 stellt Figur 5 dar. Der im Zuführkanal 32 druckbeaufschlagt anliegende Dampf gelangt bis in die Ventilkammer 34. Der weitere Weg ist ihm jedoch abgeschnitten, weil die Durchbrechungen 38 durch das eingeschobene Dampfrohr 16 versperrt sind. Ein Austreten des Dampfes aus der Ventilkammer 34 wird ihm durch die O-Ringe 40, 42 verwehrt, die die Ventilkammer 34 gegenüber der Umgebung abdichten. Die Fase 22 am linksseitigen Ende des Dampfrohrs 16 sorgt dafür, dass bei der Bedienungsbewegung des Dampfrohrs 16, bei dem es durch die O-Ringe 40, 42 geschoben wird, insbesondere der O-Ring 42 nicht beschädigt wird.

Da es sich bei den vorhergehend detailliert beschriebenen Dampfrohren um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen der Betätigungsbewegungen in anderer Form als in der hier beschriebenen erfolgen. Weiterhin schließt die Verwendung der unbestimmten Artikel "ein" bzw. "eine" nicht aus, dass die betreffenden Merkmale auch mehrfach vorhanden sein können.

### Bezugszeichenliste

- 2: Gerätefront
- 4, 5: Aufstellfläche
- 6, 16: Dampfrohr
- 8: Getränkeauslass
- 10: Griff
- 12, 18: Dampfventil
- 20: Dampfkanal
- 22: Fase
- 24: Ventilkörper
- 26: Ventildeckel
- 28: Hauptkanal
- 30: Durchbruch
- 32: Zuführkanal
- 34: Ventilkammer
- 36: Führungshülse
- 38: Durchbrechungen
- 40, 42: O-Ring
- a: Schwenkrichtungen
- b: Verschiebungsrichtungen

## Patentansprüche

1. Kaffeezubereitungsmaschine mit einem Dampfrohr (6; 16) an einem einem Benutzer zugewandten Frontbereich (2), das zur Abgabe von Dampf in einen Getränkebehälter relativ zum Gehäuse der Zubereitungsmaschine von einer Ruhestellung in eine Abgabestellung bewegbar angeordnet ist, und mit einem Ventil (12, 18), das zur Abgabe von Dampf aus dem Dampfrohr (6; 16) betätigbar ist, wobei das Ventil (12; 18) mit der bzw. durch die Bewegung des Dampfrohrs (6; 16) von der Ruhestellung in die Abgabestellung betätigbar ist und umgekehrt, **gekennzeichnet durch** Mittel, die eine dauerhafte Zwischenstellungen des Dampfrohres (6; 16) zwischen der Ruhe- und der Abgabestellung verhindern

2. Kaffeezubereitungsmaschine nach Anspruch 1, **gekennzeichnet durch** eine lineare Bewegung des Dampfrohres (6; 16).

3. Kaffeezubereitungsmaschine nach Anspruch 1, **gekennzeichnet durch** eine Schwenk-oder Kippbewegung des Dampfrohres (6; 16).

4. Kaffeezubereitungsmaschine nach einem der obigen Ansprüche, **gekennzeichnet durch** eine Kulissenführung des Dampfrohres (6; 16) zwischen der Ruhestellung und der Abgabestellung.

5. Kaffeezubereitungsmaschine nach einem der obigen Ansprüche, **dadurch gekennzeichnet, dass** das Dampfrohr (6; 16) halbautomatisch von der Abgabestellung in die Ruhestellung verfahrbar ist.

6. Kaffeezubereitungsmaschine nach einem der obigen Ansprüche, **dadurch gekennzeichnet, dass** die Bewegung des Dampfrohres (6; 16) von der einen Stellung in die andere durch eine gespannte Feder erfolgt.

7. Kaffeezubereitungsmaschine nach einem der Ansprüche 1 bis 4, **dadurch gekennzeichnet, dass** das Dampfrohr (6; 16) automatisch von der Abgabestellung in die Ruhestellung und umgekehrt verfahrbar ist.

8. Kaffeezubereitungsmaschine nach einem der obigen Ansprüche, **gekennzeichnet durch** einen Griff (11) am Dampfrohr (6; 16).

9. Kaffeezubereitungsmaschine nach einem der obigen Ansprüche, **dadurch gekennzeichnet, dass** das Dampfrohr (6; 16) in der Ruhestellung zumindest teilweise versenkt im Gehäuse angeordnet ist.

10. Kaffeezubereitungsmaschine nach einem der obigen Ansprüche, **gekennzeichnet durch** Erfassungsmittel zur Feststellung der Stellung des Dampfrohres (6; 16) in der Abgabe- und/oder Ruhestellung.

11. Kaffeezubereitungsmaschine nach einem der obigen Ansprüche mit einem Kaffeeauslass, **gekennzeichnet durch** eine Kombination des Dampfrohres (6; 16) und des Kaffeeauslasses (8) zu einem gemeinsamen Getränkeauslass, der zwischen mindestens zwei Betriebsstellungen bewegbar ist, wobei wenigstens eine Betriebsstellung eine Ruhestellung des Dampfrohres (6; 16) bildet.

12. Kaffeezubereitungsmaschine nach dem obigen Anspruch, **dadurch gekennzeichnet, dass** das Dampfrohr (6; 16) relativ zum gemeinsamen Getränkeauslass zwischen einer Ruhe- und einer Abgabestellung bewegbar angeordnet ist.

13. Kaffeezubereitungsmaschine mit einem Dampfrohr (6; 16) an einem einem Benutzer zugewandten Frontbereich (2), der zur Abgabe von Dampf in einen Getränkebehälter relativ zum Gehäuse der Zubereitungsmaschine von einer Ruhestellung in eine Abgabestellung bewegbar angeordnet ist, und mit einem Ventil (12; 18), das zur Abgabe von Dampf aus dem Dampfrohr (6; 16) betätigbar ist, wobei das Dampfrohr (6; 16) zur Betätigung des Ventils (12; 18) verwendet wird, **gekennzeichnet durch** Mittel, die eine dauerhafte Zwischenstellungen des Dampfrohres (6; 16) zwischen der Ruhe- und der Abgabestellung verhindern.

## Claims

1. Coffee preparation machine with a steam pipe (6; 16) at a front region (2) facing a user, which pipe is arranged to be movable relative to the housing of the preparation machine from a rest setting to a delivery setting for the delivery of steam to a beverage container, and with a valve (12, 18) which is actuable for the delivery of steam from the steam pipe (6; 16), wherein the valve (12; 18) is actuable by or through the movement of the steam pipe (6; 16) from the rest setting to the delivery setting and conversely, **characterised by** means which preclude permanent intermediate settings of the steam pipe (6; 16) between the rest and delivery settings.

2. Coffee preparation machine according to claim 1, **characterised by** a linear movement of the steam pipe (6; 16).

3. Coffee preparation machine according to claim 1, **characterised by** a pivoting or tipping movement of the steam pipe (6; 16).

4. Coffee preparation machine according to any one of the preceding claims, **characterised by** a gate guide of the steam pipe (6; 16) between the rest setting and the delivery setting.

5. Coffee preparation machine according to any one of the preceding claims, **characterised in that** the steam pipe (6; 16) is semi-automatically movable from the delivery setting to the rest setting.

6. Coffee preparation machine according to any one of the preceding claims, **characterised in that** the movement of the steam pipe (6; 16) from one setting to the other is effected by a spring under stress.

7. Coffee preparation machine according to any one of claims 1 to 4, **characterised in that** the steam pipe (6; 16) is automatically movable from the delivery setting to the rest setting and conversely.

8. Coffee preparation machine according to any one of the preceding claims, **characterised by** a handle (11) at the steam pipe (6; 16).

9. Coffee preparation machine according to any one of the preceding claims, **characterised in that** the steam pipe (6; 16) in the rest setting is arranged to be at least partly recessed in the housing.

10. Coffee preparation machine according to any one of the preceding claims, **characterised by** detecting means for detecting the setting of the steam pipe (6; 16) in the delivery setting and/or rest setting.

11. Coffee preparation machine according to any one of the preceding claims with a coffee outlet, **characterised by** a combination of the steam pipe (6; 16) and the coffee outlet (8) to form a common beverage outlet, which is movable between at least two operating settings, wherein at least one operating setting forms a rest setting of the steam pipe (6; 16).

12. Coffee preparation machine according to the preceding claim, **characterised in that** the steam pipe (6; 16) is arranged to be movable relative to the common beverage outlet between a rest setting and a delivery setting.

13. Coffee preparation machine with a steam pipe (6; 16) at a front region (2) facing a user, which pipe is arranged to be movable relative to the housing of the preparation machine from a rest setting to a delivery setting for the delivery of steam to a beverage container, and with a valve (12, 18) which is actuable for the delivery of steam from the steam pipe (6; 16), wherein the steam pipe (6; 16) is used for actuation of the valve (12; 18), **characterised by** means which preclude permanent intermediate settings of the steam pipe (6; 16) between the rest and delivery settings.

## Revendications

1. Machine à café dotée d'un tuyau à vapeur (6 ; 16) sur une partie avant (2) orientée vers un utilisateur, qui pour la distribution de vapeur dans un récipient pour boissons est disposé de manière mobile par rapport au boîtier de la machine à café entre une position de repos et une position de distribution, et dotée d'une soupape (12, 18) qui peut être actionnée pour la distribution de vapeur sortant du tuyau à vapeur (6 ; 16), la soupape (12 ; 18) pouvant être actionnée avec ou par le mouvement du tuyau à vapeur (6 ; 16) de la position de repos à la position de distribution et inversement, **caractérisée par** des moyens qui empêchent des positions intermédiaires durables du tuyau à vapeur (6 ; 16) entre la position de repos et la position de distribution.

2. Machine à café selon la revendication 1, **caractérisée par** un mouvement linéaire du tuyau à vapeur (6 ; 16).

3. Machine à café selon la revendication 1, **caractérisée par** un mouvement pivotant ou basculant du tuyau à vapeur (6 ; 16).

4. Machine à café selon l'une des revendications précédentes, **caractérisée par** un guide-coulisse du tuyau à vapeur (6 ; 16) entre la position de repos et la position de distribution.

5. Machine à café selon l'une des revendications précédentes, **caractérisée en ce que** le tuyau à vapeur (6 ; 16) peut se déplacer de manière semi-automatique de la position de distribution à la position de repos.

6. Machine à café selon l'une des revendications précédentes, **caractérisée en ce que** le mouvement du tuyau à vapeur (6 ; 16) d'une position à l'autre s'effectue par un ressort tendu.

7. Machine à café selon l'une des revendications 1 à 4, **caractérisée en ce que** le tuyau à vapeur (6 ; 16) peut se déplacer de manière automatique de la position de distribution à la position de repos et inversement.

8. Machine à café selon l'une des revendications précédentes, **caractérisée par** une poignée (11) sur le tuyau à vapeur (6 ; 16).

9. Machine à café selon l'une des revendications précédentes, **caractérisée en ce que** le tuyau à vapeur (6 ; 16) en position de repos est au moins partiellement noyé dans le boîtier.

10. Machine à café selon l'une des revendications précédentes, **caractérisée par** des moyens de détection pour déterminer la position du tuyau à vapeur (6 ; 16) dans la position de distribution et/ou de repos.

11. Machine à café selon l'une des revendications précédentes comportant une sortie café, **caractérisée par** une combinaison du tuyau à vapeur (6 ; 16) et de la sortie café (8) en une sortie boissons commune qui est mobile entre au moins deux positions de fonctionnement, au moins une position de fonctionnement étant une position de repos du tuyau à vapeur (6 ; 16).

12. Machine à café selon la revendication précédente, **caractérisée en ce que** le tuyau à vapeur (6 ; 16) est disposé de manière mobile par rapport à la sortie boissons commune entre une position de repos et une position de distribution.

13. Machine à café dotée d'un tuyau à vapeur (6 ; 16) sur une partie avant (2) orientée vers un utilisateur, qui pour la distribution de vapeur dans un récipient pour boissons est disposé de manière mobile par rapport au boîtier de la machine à café entre une position de repos et une position de distribution, et dotée d'une soupape (12 ; 18) qui peut être actionnée pour la distribution de vapeur sortant du tuyau à vapeur (6 ; 16), le tuyau à vapeur (6 ; 16) étant utilisé pour l'actionnement de la soupape (12 ; 18), **caractérisée par** des moyens qui empêchent des positions intermédiaires durables du tuyau à vapeur (6 ; 16) entre la position de repos et la position de distribution.
